# EUROPÄISCHE PATENTSCHRIFT

(11) **EP 1 882 380 B1**
(45) Veröffentlichungstag und Bekanntmachung des Hinweises auf die Patenterteilung: **13.10.2010**
(21) Anmeldenummer: 06707171.2
(22) Anmeldetag: 22.02.2006
(51) Int. Cl.: H04W 8/20, H04M 1/275

(54) **WIEDERGABE DER EIGENEN RUFNUMMER AUF DER ANZEIGEEINRICHTUNG EINES IN EINEM TELEKOMMUNIKATIONSNETZ NUTZBAREN ENDGERÄTES**
DISPLAY OF OWN TELEPHONE NUMBER ON THE DISPLAY DEVICE OF A MOBILE TERMINAL THAT CAN BE USED IN A TELECOMMUNICATION NETWORK
REPRODUCTION DU PROPRE NUMERO D'APPEL SUR LE SYSTEME D'AFFICHAGE D'UN TERMINAL POUVANT ETRE UTILISE DANS UN RESEAU DE TELECOMMUNICATION

(30) Priorität: 20.05.2005 DE 102005024011
(43) Veröffentlichungstag der Anmeldung: 30.01.2008
(73) Patentinhaber: Vodafone Holding GmbH, 40213 Düsseldorf (DE)
(72) Erfinder: FOLEY, Peter, St. Albans, AL3 5LG (GB); BURHOLT, Adrian, Bromham Wiltshire SN 15 2DW (GB); PULLIN, Graham, Ecir 5DF London (GB); LISS, Peter, 11523 Stockholm (SE); TOLLEMACHE, Luke, Oxford OX41YB (GB); DE VOS, Geert, B-1730 Asse (BE); LAW, Kwan, 40468 Düsseldorf (DE); WEISSERT, Patrick, 40549 Düsseldorf (DE); CARTER, Phil, Oxfordshire 0X10 9GF (GB); PACKER, Stephen, BA1 8AD, London (GB)
(74) Vertreter: Weisbrodt, Bernd
(86) Internationale Anmeldenummer: PCT/EP2006/001608
(87) Internationale Veröffentlichungsnummer: WO 2006/122588

(56) Entgegenhaltungen:
- EP-A- 1 385 082
- WO-A-03/017627
- US-B1- 6 456 859
- US-B1- 6 801 781
- PATENT ABSTRACTS OF JAPAN Bd. 1999, Nr. 10, 31. August 1999 (1999-08-31) & JP 11 136343 A (SONY CORP), 21. Mai 1999 (1999-05-21)
- "Digital cellular telecommunications system; Subscriber Identity Modules (SIM); Functional characteristics (GSM 02.17 version 5.0.1); ETS 300 922" ETSI STANDARDS, EUROPEAN TELECOMMUNICATIONS STANDARDS INSTITUTE, SOPHIA-ANTIPO, FR, Bd. SMG1, Nr. First Edition, April 1997 (1997-04), XP014025535 ISSN: 0000-0001

## Beschreibung

Die vorliegende Erfindung betrifft ein Verfahren zum Betreiben eines in einem Telekommunikationsnetz, vorzugsweise einem Mobilfunknetz, nutzbaren Endgerätes, welches eine Anzeigeeinrichtung zur optischen und/oder akustischen Wiedergabe von Informationen und wenigstens eine Eingabeeinrichtung zur Erfassung von Informationen aufweist, wobei der Zugang des Endgerätes zum Telekommunikationsnetz unter Nutzung wenigstens einer einen Telekommunikationsteilnehmer im Telekommunikationsnetz identifizierenden Kennung erfolgt, welcher seitens des Telekommunikationsnetzes eine Rufnummer zugeordnet ist. Ferner betrifft die vorliegende Erfindung ein Endgerät zur Nutzung in einem Telekommunikationsnetz, vorzugsweise einem Mobilfunknetz, mit einer Anzeigeeinrichtung zur optischen und/oder akustischen Wiedergabe von Informationen und wenigstens einer Eingabeeinrichtung zur Erfassung von Informationen, wobei der Zugang des Endgerätes zum Telekommunikationsnetz unter Nutzung wenigstens einer einen Telekommunikationsteilnehmer im Telekommunikationsnetz identifizierenden Kennung erfolgt, welcher seitens des Telekommunikationsnetzes eine Rufnummer zugeordnet ist. Darüber hinaus betrifft die vorliegende Erfindung ein kartenförmiges Trägerelement elektronischer Baugruppen, welches in ein in einem Telekommunikationsnetz, vorzugsweise einem Mobilfunknetz, nutzbares Endgerät einsetzbar ist und wenigstens eine einen Telekommunikationsteilnehmer im Telekommunikationsnetz identifizierende Kennung aufweist, die dem Endgerät den Zugang zum Telekommunikationsnetz ermöglicht und der seitens des Telekommunikationsnetzes eine Rufnummer zuordbar ist.

Im Stand der Technik sind derartige Verfahren, Endgeräte und kartenförmige Trägerelemente elektronischer Baugruppen in zahlreichen Ausführungsformen und Ausgestaltungen bekannt, insbesondere von in digitalen zellularen Mobilfunknetzen und Mobilfunktelefonen gemäß dem GSM-Funknetzstandard (GSM: Global System for Mobile Communications), welcher sogenannte, in der Regel in Mobilfunktelefone einsetzbare SIM-Chipkarten (SIM: Subscriber Identity Module) als kartenförmige Trägerelemente elektronischer Baugruppen insbesondere zur Teilnehmeridentifikation und Authentifizierung für einen Zugang des Mobilfunktelefons zum Mobilfunknetz, nutzt. Beim GSM-Funknetzstandard weist die SIM-Chipkarte zur eindeutigen Kennung eines Mobilfunkteilnehmers die sogenannte IMSI (IMSI: International Mobile Subscriber Identification) auf, die der Identifikation des Teilnehmers bei der Vermittlung und der Signalisierung einer Kommunikationsverbindung dient. Der IMSI ist seitens des Mobilfunknetzes die netzspezifische und vollständige internationale Rufnummer, die sogenannte MSISDN (MSISDN: Mobile Subscriber ISDN-Number; ISDN: Integrated Services Digital Network), zugeordnet. Die Korrelation von IMSI und MSISDN erfolgt bei Freischaltung der SIM-Karte im Mobilfunknetz.

Nachteilig bei dem bisher bekannten Betreiben von in Telekommunikationsnetzen nutzbaren Endgeräten ist, dass Teilnehmer ihre eigene Rufnummer, unter der sie im Telekommunikationsnetz erreichbar sind, häufig nicht auswendig wissen, insbesondere da die Rufnummer aus einer Folge von bis zu 15 Ziffern besteht und sich ein Teilnehmer selten selber anruft. Ein Teilnehmer kann zwar seitens der bisher bekannten Mobilfunktelefone und/oder den mit diesen nutzbaren SIM-Chipkarten neben Rufnummern von gewünschten und/oder bevorzugten Kommunikationspartnern auch seine eigene Rufnummer speichern, in der Regel bedingt eine Wiedergabe der eigenen Rufnummer seitens einer Anzeigeeinrichtung des Mobilunktelefons jedoch umfangreiche und aufwendige Bedienangaben seitens einer in der Regel als Tastatur ausgebildeten Eingabeeinrichtung des Mobilfunktelefons. Die Funktionalität der Wiedergabe der eigenen Rufnummer seitens der in der Regel als Display ausgebildeten Anzeigeeinrichtung eines Endgerätes weist bisher dementsprechend äußerst umfangreiche und insbesondere für ältere und/oder ungeübte Nutzer nicht beziehungsweise nur schwer verständliche Bedienmöglichkeiten seitens entsprechender Menüführungen des Endgerätes auf. Die Wiedergabe der eigenen Rufnummer seitens einer Anzeigeeinrichtung des Endgerätes während einer Kommunikationsverbindung unter Nutzung des Endgerätes, beispielsweise einem Telefonat, ist bisher nicht beziehungsweise nur mit entsprechendem Aufwand möglich und insofern insbesondere für ältere und/oder ungeübte Nutzer in der Regel nicht durchführbar.

Die JP 11 136 343 A offenbart ein Telefonsystem, bei dem die Rufnummer eines Teilnehmers während des Telefongesprächs an den Gesprächspartner übermittelt werden kann. Die Rufnummer ist vorab im Endgerät des Teilnehmers gespeichert und kann durch das Drücken eines Schalters angezeigt werden. Die Übermittlung der Rufnummer an den Gesprächspartner erfolgt in Form eines Sprachsignals.

Aus der WO 03/017627 A2 ist ein Endgerät bekannt, bei dem automatisch während einer Telefonverbindung die eigene Rufnummer angezeigt wird.

Da im alltäglichen Gebrauch von in einem Telekommunikationsnetz betreibbaren und/oder nutzbaren Endgeräten zahlreiche Situationengegeben sind, in denen ein Kommunikationspartner einem anderen Kommunikationspartner seine eigene Rufnummer mitteilen möchte beziehungsweise muss, insbesondere während einer Kommunikation zwischen Nutzern von entsprechenden Endgeräten über ein Telekommunikationsnetz, ist ein Bedarf an einer entsprechend einfachen Realisierung einer solchen Funktionalität gegeben.

Vor diesem Hintergrund liegt der vorliegenden Erfindung die **Aufgabe** zugrunde, ein Verfahren zum Betreiben eines in einem Telekommunikationsnetz, vorzugsweise einem Mobilfunknetz, nutzbaren Endgerätes der eingangs genannten Art, als auch ein Endgerät zur Nutzung in einem Telekommunikationsnetz, vorzugsweise einem Mobilfunknetz, der eingangs genannten Art derart weiterzubilden, dass unter Meidung der beschriebenen Nachteile insbesondere für ältere und/oder ungeübte Nutzer eine einfache und weniger umständliche Wiedergabe der eigenen Rufnummer seitens einer Anzeigeeinrichtung des Endgerätes ermöglicht wird.

Zur technischen **Lösung** dieser Aufgabe wird mit der vorliegenden Erfindung ein Verfahren gemäß Anspruch 1 zum Betreiben eines in einem Telekommunikationsnetz, vorzugsweise einem Mobilfunknetz, nutzbaren Endgerätes, welches eine Anzeigeeinrichtung zur optischen und/oder akustischen Wiedergabe von Informationen und wenigstens eine Eingabeeinrichtung zur Erfassung von Informationen aufweist, wobei der Zugang des Endgerätes zum Telekommunikationsnetz unter Nutzung wenigstens einer einen Telekommunikationsteilnehmer im Telekommunikationsnetz identifizierenden Kennung erfolgt, welcher seitens des Telekommunikationsnetzes eine Rufnummer zugeordnet ist, bereitgestellt, bei dem die Rufnummer endgeräteseitig erfasst und bei vorzugsweise einmaliger Betätigung der Eingabeeinrichtung seitens der Anzeigeeinrichtung wiedergegeben wird, wobei zumindest die erstmalige Erfassung der Rufnummer unter Nutzung der Kennung erfolgt, wozu seitens des Endgerätes eine Einrichtung vorgesehen ist, die mit der Kennung die Rufnummer seitens des Telekommunikationsnetzes abfragt.

Der Erfindung liegt die Erkenntnis zugrunde, dass die Wiedergabe der eigenen Rufnummer seitens der Anzeigeeinrichtung eines Endgerätes vereinfachbar ist, insbesondere für ältere und/oder ungeübte Nutzer, wenn die dazu erforderlichen Betätigungseingaben seitens der Eingabeeinrichtung des Endgerätes reduziert und vorzugsweise minimalisiert sind.

Vorteilhafterweise erfolgt die Abfrage der Rufnummer seitens des Telekommunikationsnetzes unter Nutzung der Kennung automatisch, vorteilhafterweise beim Einschalten des Endgerätes und/oder dem Anmelden desselben im Telekommunikationsnetz und/oder im Rahmen der Betätigung der Eingabeeinrichtung des Endgerätes zur Wiedergabe der Rufnummer seitens der Anzeigeeinrichtung des Endgerätes.

Vorteilhafterweise wird die erfasste Rufnummer seitens des Endgerätes und/oder seitens der Einrichtung gespeichert. Hierzu weist das Endgerät und/oder die Einrichtung wenigstens eine dazu vorgesehene Speichereinrichtung auf. Durch die Speicherung der erfassten Rufnummer kann eine erneute Erfassung der Rufnummer zu einem späteren Zeitpunkt vorteilhafterweise entfallen. Zu einem späteren Zeitpunkt wird dann bei Betätigung der Eingabeeinrichtung vorteilhafterweise die gespeicherte Rufnummer seitens der Anzeigeeinrichtung des Endgerätes wiedergegeben.

In einer weiteren Ausgestaltung der Erfindung ist die Kennung seitens der Einrichtung gespeichert.

In einer bevorzugten Ausgestaltung der Erfindung ist die Einrichtung ein in das Endgerät einsetzbares kartenförmiges Trägerelement elektronischer Baugruppen, vorzugsweise ein dem Teilnehmer von dem Betreiber des Telekommunikationsnetzes zur Verfügung gestelltes kartenförmiges Teilnehmeridentifikationsmodul, vorzugsweise eine SIM-Chipkarte beziehungsweise USIM-Chipkarte (USIM: Universal Subscriber Identity Module). Dementsprechend ist die Kennung vorteilhafterweise eine IMSI und die Rufnummer eine MSISDN.

In einer weiteren vorteilhaften Ausgestaltung der Erfindung erfolgt die Wiedergabe der Rufnummer, optisch und/oder akustisch, wobei die optische Wiedergabe der Rufnummer vorzugsweise graphisch in einer gegenüber sonstigen graphischen Wiedergaben vergrößerten Form erfolgt. In einer weiteren vorteilhaften Ausgestaltung der Erfindung erfolgt die Wiedergabe in einer gegenüber sonstigen seitens der Anzeigeeinrichtung wiedergegebenen Informationen hervorgehobenen Art und Weise, beispielsweise durch eine andere Farbe, durch ein Blinken, unter Einschaltung einer Hintergrundbeleuchtung der als Display ausgebildeten Anzeigeeinrichtung und/oder dergleichen, so dass insbesondere ältere und/oder ungeübte Nutzer die Rufnummer schnell und eindeutig von sonstigen Informationen seitens der Anzeigeeinrichtung unterscheiden können.

In einer weiteren Ausgestaltung der Erfindung erfolgt die Betätigung der Eingabeeinrichtung akustisch, vorzugsweise durch Spracheingabe. Bei einer weiteren Ausgestaltung der Erfindung erfolgt die Betätigung der Eingabeeinrichtung mechanisch, wozu die Eingabeeinrichtung vorzugsweise wenigstens eine Taste aufweist, die bei Betätigung eine Wiedergabe der Rufnummer auslöst und/oder bewirkt. In einer besonders bevorzugten Ausgestaltung der Erfindung weist die wenigstens eine Taste ausschließlich die Funktionalität der Wiedergabe der Rufnummer auf.

In einer weiteren besonders vorteilhaften Ausgestaltung der Erfindung erfolgt die Betätigung der Eingabeeinrichtung durch räumliche Bewegung des Endgerätes, vorzugsweise durch ein wenigstens einmal erfolgendes Verschwenken des Endgerätes um eine Koordinatenachse des Endgerätes. Erfindungsgemäß ist das Endgerät dabei derart ausgebildet, dass dieses die gewünschte Betätigung der Eingabeeinrichtung zur Wiedergabe der Rufnummer der Anzeigeeinrichtung selbstständig anhand beziehungsweise aus der Bewegung des Endgerätes im Raum erkennt. Dadurch können vorteilhafterweise ansonsten erforderliche umfangreiche und/oder aufwendige Tasteneingaben seitens des mobilen Endgerätes entfallen. Vorteilhafterweise sind Muster räumlicher Bewegungen des Endgerätes als Betätigung der Eingabeeinrichtung nutzbar.

In einer weiteren besonders vorteilhaften Ausgestaltung der Erfindung wird eine Wiedergabe der Rufnummer zumindest während einer Kommunikationsverbindung ermöglicht. Erfindungsgemäß wird so dem Bedarf der Wiedergabe einer Rufnummer seitens der Anzeigeeinrichtung des Endgerätes genüge getan, der gegeben ist, wenn ein Nutzer des Endgerätes in einer Kommunikationsverbindung mit einem anderen Telekommunikationsteilnehmer steht und dieser Nutzer dem anderen Telekommunikationsteilnehmer seine eigene Rufnummer mitteilen möchte und/oder muss und dabei sicherstellen will, dass er die Telekommunikationsverbindung nicht beenden muss und/oder Gefahr läuft, dass dies aufgrund einer falschen Betätigung der Eingabeeinrichtung versehentlich geschieht.

In einer weiteren vorteilhaften Ausgestaltung der Erfindung ist die Rufnummer durch wenigstens eine weitere Betätigung der Eingabeeinrichtung unter Nutzung wenigstens eines Mitteilungsdienstes des Telekommunikationsnetzes an einen anderen Teilnehmer übertragbar, vorzugsweise während einer Kommunikationsverbindung mit dem Teilnehmer. In einer bevorzugten Ausgestaltung der Erfindung ist der Mitteilungsdienst des Telekommunikationsnetzes ein Kurzmitteilungsdienst (SMS: Short Messages Service).

Vorteilhafterweise wird die Rufnummer von der Einrichtung automatisch erfasst, wenn ein Endgerät neu eingeschaltet wird, vorzugsweise wenn die Einrichtung erstmalig in einem Endgerät eingesetzt ist.

In einer weiteren besonders vorteilhaften Ausgestaltung der Erfindung ist das erfindungsgemäße Verfahren als Anwendungsprogramm auf die Einrichtung und/oder das Endgerät übertragbar und seitens des Endgerätes ausführbar. Bei entsprechender Ausgestaltung des Endgerätes, beispielsweise bei hinsichtlich der Funktionalität von frei belegbaren Tasten seitens der Eingabeeinrichtung oder dergleichen, lässt sich so die Funktionalität des erfindungsgemäßen Verfahrens seitens entsprechender Endgeräte nachrüsten.

Zur technischen **Lösung** der eingangs genannten Aufgabe wird mit der vorliegenden Erfindung ferner ein Endgerat gemäß Anspruch 14 zur Nutzung in einem Telekommunikationsnetz, vorzugsweise einem Mobilfunknetz, mit einer Anzeigeeinrichtung zur optischen und/oder akustischen Wiedergabe von Informationen und wenigstens einer Eingabeeinrichtung zur Erfassung von Informationen, wobei der Zugang des Endgerätes zum Telekommunikationsnetz unter Nutzung wenigstens einer einen Telekommunikationsteilnehmer im Telekommunikationsnetz identifizierenden Kennung erfolgt, welcher seitens des Telekommunikationsnetzes eine Rufnummer zugeordnet ist, bereitgestellt, bei dem die Rufnummer endgeräteseitig erfassbar und bei Betätigung der Eingabeeinrichtung seitens der Anzeigeeinrichtung wiedergebbar ist, wobei seitens des Endgerätes eine Einrichtung zur Erfassung der Rufnummer vorgesehen ist, mit welcher die Rufnummer unter Nutzung der Kennung seitens des Telekommunikationsnetzes abfragbar ist.

Die erfasste Rufnummer ist vorteilhafterweise seitens einer Speichereinrichtung des Endgerätes und/oder seitens einer Speichereinrichtung der Einrichtung speicherbar. Vorteilhafterweise ist die gespeicherte Rufnummer wiedergebbar.

In einer weiteren vorteilhaften Ausgestaltung der Erfindung ist die Kennung seitens der Einrichtung gespeichert.

In einer weiteren vorteilhaften Ausgestaltung der Erfindung ist die Einrichtung ein in das Endgerät einsetzbares kartenförmiges Trägerelement elektronischer Baugruppen, vorzugsweise ein dem Teilnehmer von dem Betreiber des Telekommunikationsnetzes zur Verfügung gestelltes kartenförmiges Teilnehmeridentifikationsmodul, vorzugsweise in Form einer SIM-Chipkarte beziehungsweise USIM-Chipkarte. Die den Telekommunikationsteilnehmer im Telekommunikationsnetz identifizierende Kennung ist dementsprechend die sogenannte IMSI und die der Kennung (IMSI) seitens des Telekommunikationsnetzes zugeordnete Rufnummer die sogenannte MSISDN.

In einer weiteren vorteilhaften Ausgestaltung der Erfindung ist die Rufnummer optisch und/oder akustisch wiedergebbar, wobei die optische Wiedergabe der Rufnummer vorzugsweise graphisch in einer gegenüber sonstigen graphischen Wiedergaben vergrößerten oder sonst wie hervorgehobenen Form erfolgt.

In einer weiteren Ausgestaltung der Erfindung erfolgt die Betätigung der Eingabeeinrichtung akustisch, vorzugsweise durch Spracheingabe. Bei entsprechender Funktionalität des Endgerätes können erfindungsgemäß ansonsten erforderliche umfangreiche und/oder aufwendige Tasteneingaben seitens des Endgerätes entfallen.

In einer weiteren bevorzugten Ausgestaltung der Erfindung erfolgt die Betätigung der Eingabeeinrichtung mechanisch, wozu die Eingabeeinrichtung vorzugsweise wenigstens eine Taste aufweist, die bei Betätigung eine Wiedergabe der Rufnummer auslöst und/oder bewirkt. Vorteilhafterweise ist die Taste ausschließlich zur Wiedergabe der Rufnummer funktionalisiert. Erfindungsgemäß werden so ansonsten erforderliche umfangreiche und/oder aufwändige Tasteneingaben seitens einer Eingabeeinrichtung des Endgerätes entbehrlich und die Bedienung und/oder Handhabbarkeit zur Wiedergabe der Rufnummer insbesondere für ältere und/oder ungeübte Nutzer erheblich vereinfacht.

In einer weiteren vorteilhaften Ausgestaltung der Erfindung erfolgt die Betätigung der Eingabeeinrichtung durch räumliche Bewegung des Endgerätes, vorzugsweise durch ein wenigstens einmal erfolgendes Verschwenken des Endgerätes um wenigstens eine Koordinatenachse des Endgerätes. Auch bei dieser Ausgestaltung der Erfindung können so ansonsten erforderliche umfangreiche und/oder aufwändige Tasteneingaben vorteilhafterweise entfallen.

Gemäß einer weiteren bevorzugten Ausgestaltung der Erfindung ist die Rufnummer zumindest während einer Kommunikationsverbindung seitens der Anzeigeeinrichtung des Endgerätes wiedergebbar.

In einer weiteren vorteilhaften Gestaltung der Erfindung ist die Rufnummer durch wenigstens eine weitere Betätigung der Eingabeeinrichtung unter Nutzung wenigstens eines Mitteilungsdienstes des Telekommunikationsnetzes, vorzugsweise eines Kurzmitteilungsdienstes (SMS) übertragbar, vorzugsweise während einer Kommunikationsverbindung mit einem anderen Teilnehmer.

In einer bevorzugten Ausgestaltung der Erfindung ist das erfindungsgemäße Endgerät ein in Mobilfunknetzen betreibbares mobiles Endgerät, vorzugsweise ein Mobilfunktelefon.

Vorteilhafterweise ist das erfindungsgemäße Endgerät zur Ausführung des erfindungsgemäßen Verfahrens ausgebildet.

Gegenstand der vorliegenden Erfindung ist ferner ein kartenförmiges Trägerelement elektronischer Baugruppen gemäß Anspruch 27, welches in ein in einem Telekommunikationsnetz, vorzugsweise einem Mobilfunknetz, nutzbares Endgerät einsetzbar ist und wenigstens eine einen Telekommunikationsteilnehmer im Telekommunikationsnetz identifizierende Kennung aufweist, die mit dem Endgerät den Zugang zum Telekommunikationsnetz ermöglicht und der seitens des Telekommunikationsnetzes eine Rufnummer zuordbar ist, wobei das kartenförmige Trägerelement elektronischer Baugruppen zur Ausführung des erfindungsgemäßen Verfahrens mit einem erfindungsgemäßen Endgerät ausgebildet ist.

In einer konkreten Ausgestaltung der Erfindung ist das kartenförmige Trägerelement elektronischer Baugruppen ein dem Teilnehmer von dem Betreiber des Telekommunikationsnetzes zur Verfügung gestelltes kartenförmiges Teilnehmeridentifikationsmodul in Form einer SIM-Chipkarte beziehungsweise USIM-Chipkarte. Die Kennung ist dementsprechend vorzugsweise eine IMSI und die Rufnummer eine MSISDN.

Weitere Einzelheiten, Merkmale und Vorteile der Erfindung werden nachfolgend anhand des in den Figuren der Zeichnung dargestellten Ausführungsbeispiels näher erläutert. Dabei zeigen:
- Fig. 1: in einer schematischen Darstellung ein Ausführungsbeispiel eines erfindungsgemäßen Endgerätes zur Ausführung eines erfindungsgemäßen Verfahrens in einem ersten Funktionszustand;
- Fig. 2: in einer schematischen Darstellung das erfindungsgemäße Endgerät zur Ausführung eines erfindungsgemäßen Verfahrens gemäß Fig. 1 mit einer erfolgenden Betätigung der Eingabeeinrichtung und
- Fig. 3: in einer schematischen Darstellung das erfindungsgemäße Endgerät zur Ausführung eines erfindungsgemäßen Verfahrens gemäß Fig. 1 in einem zweiten Funktionszustand nach erfolgter Betätigung der Eingabeeinrichtung gemäß Fig. 2.

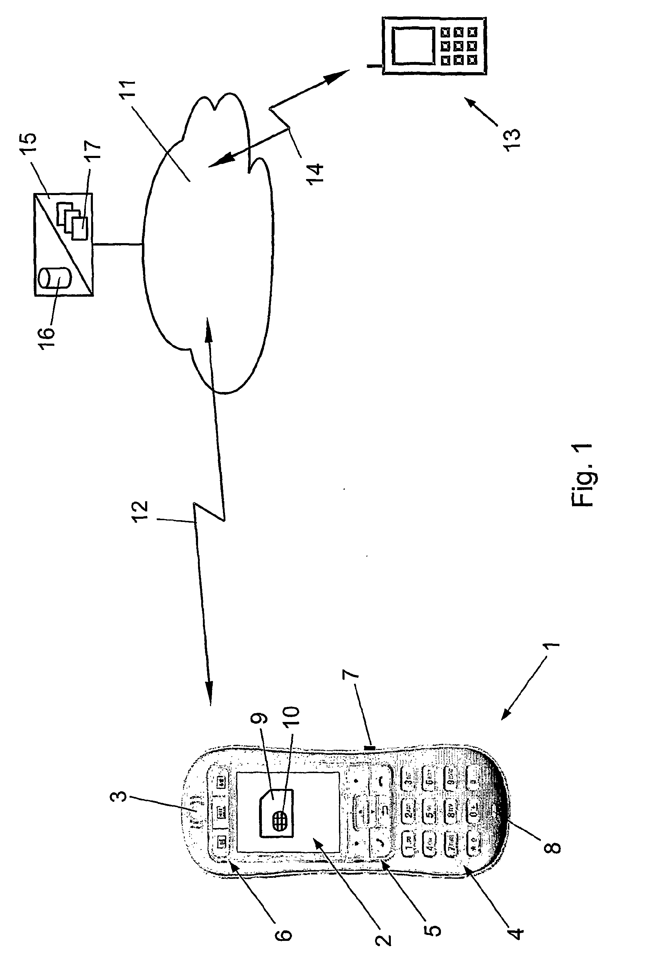

Die Figuren 1 bis 3 zeigen jeweils ein in einem Telekommunikationsnetz 11, vorliegend einem Mobilfunknetz, betreibbares mobiles Endgerät 1, vorliegend in Form eines Mobilfunktelefons. Das Mobilfunktelefon 1 weist ein Display 2 als Anzeigeeinrichtung zur optischen Wiedergabe von Informationen und einen Lautsprecher 3 als Anzeigeeinrichtung zur akustischen Wiedergabe von Informationen auf. Ferner weist das Mobilfunktelefon 1 an verschiedenen Positionen angeordnete Eingabeeinrichtungen 4, 5, 6, 7 und 8 auf. Die Eingabeeinrichtung 8 ist dabei als Mikrofon ausgebildet und dient zur Erfassung akustischer Informationen zu Kommunikationszwecken und/oder Betätigungseingaben, vorliegend mittels Sprachsteuerung. Die zwölf Tasten aufweisende Eingabeeinrichtung 4 dient der Erfassung von Informationen durch Eingabe von einzelnen Zeichen, beispielsweise Ziffern und/oder Buchstaben. Die sechs Tasten aufweisende Eingabeeinrichtung 5 dient zur Steuerung von und/oder durch Funktionalitäten des Mobilfunktelefons1, beispielsweise zur Gesprächsannahme, Gesprächsbeendigung, Menüauswahl und dergleichen Funktionalitäten. Die mittlere Taste der Eingabeeinrichtung 5 ist dabei als zwischen zwei Positionen kippbare Taste ausgebildet und erlaubt in entsprechenden Anwendungen des Mobilfunktelefons 1 ein Blättern beziehungsweise ein sogenanntes Scrollen, insbesondere für eine weitergehende Auswahl. Die drei nebeneinander angeordneten Tasten der Eingabeeinrichtung 6 sind vorliegend für eine weitergehende Nutzung von seitens der Anzeigeeinrichtung 2 wiedergebbaren Kommunikationsinformationen, wie beispielsweise eingegangenen Nachrichten, wie Kurzmitteilungen eines Kurzmitteilungsdienstes (SMS), verpasste Anrufe, oder dergleichen Kommunikationsinformationen vorgesehen. Eine entsprechende weitergehende Nutzung wird dabei durch Betätigung einer der entsprechenden Tasten der Eingabeeinrichtung 6 ausgelöst. Die vorliegend an einer Gehäuseseite des Mobilfunktelefons 1 angeordnete Taste 7 der Eingabeeinrichtung 7 bewirkt bei Betätigung durch Tastendruck eine optische Wiedergabe der Rufnummer (MSISDN) seitens der Anzeigeeinrichtung 2 des Mobilfunktelefons 1, wie nachfolgend noch näher erläutert.

In das Mobilfunktelefon 1 ist eine sogenannte SIM-Chipkarte 9 einsetzbar, welche einen sogenannten SIM-Chip mit verschiedenen elektronischen Baugruppen, insbesondere ein ROM (Read Only Memory), EEPROM (Electrically Erasable and Programmable ROM), RAM (Random Access Memory), eine CPU (Central Processing Unit), eine I/O-Schnittstelle und entsprechende Kontakte zur Kontaktierung in dem Mobilfunktelefon 1 aufweist.

Die SIM-Chipkarte 9 beziehungsweise der SIM-Chip 10 wird einem Mobilfunkteilnehmer von dem Betreiber 15 des Mobilfunknetzes 11 zur Verfügung gestellt. Die SIM-Chipkarte 9 beziehungsweise der SIM-Chip 10 derselben enthält dabei unter anderem die internationale Teilnehmerkennung IMSI, ohne welche das Mobilfunktelefon 1 keinen Zugang zum Mobilfunktelefon 11 und dessen Diensten erlangen kann. Der Mobilfunknetzbetreiber 15 unterhält dabei eine Datenbank 16, vorliegend das sogenannte HLR (HLR: Home Location Register), in welchem der IMSI eine Rufnummer, die MSISDN, zugeordnet ist, sofern die SIM-Chipkarte 9 und damit die entsprechende IMSI seitens des Mobilfunknetzes 11 freigeschaltet ist. Die Zuordnung der IMSI zur MSISDN, also der Kennung zu der Rufnummer unter der ein Teilnehmer im Mobilfunknetz 11 erreichbar ist, ist in den Figuren 1 bis 3 symbolisch durch die mit dem Bezugszeichen 17 gekennzeichneten Anwendungen seitens des Mobilfunknetzbetreibers 15 dargestellt. Verbindungen zwischen dem Mobilfunktelefon 1 und dem Mobilfunknetz 11, beispielsweise sogenannte MTCs (MTC: Mobile Terminated Call), MOCs (MOC: Mobile Orginated Call) oder die Registrierung des Mobilfunktelefons 1 im Mobilfunknetz 11, sogenannter Log-In, sind in den Figuren 1 bis 3 durch den mit den Bezugszeichen 12 gekennzeichneten Doppelpfeil symbolisch dargestellt. Gleiches gilt für das in den Figuren symbolisch mit dem Zeichen 13 gekennzeichnete Mobilfunktelefon eines weiteren Telekommunikationsteilnehmers. Entsprechende Kommunikationsverbindungen zwischen dem Mobilfunknetz 11 und dem Mobilfunktelefon 13 dieses Teilnehmers sind in den Figuren 1 bis 3 mit dem mit dem Bezugszeichen 14 gekennzeichneten Doppelpfeil symbolisch dargestellt.

Vorliegend fragt die SIM-Chipkarte 9 beziehungsweise deren SIM-Chip 10 beim erstmaligen Einschalten des Mobilfunktelefons 1 automatisch über die Kommunikationsverbindung 12 zum Mobilfunknetz 11 die seitens des Mobilfunknetzes 11 der entsprechenden IMSI zugeordnete MSISDN ab. Dabei wird die seitens der SIM-Chipkarte 9 gespeicherte Kennung/IMSI im Rahmen des Zugangs beziehungsweise der Zugangskontrolle zum Mobilfunknetz 11 über die Kommunikationsverbindung 12 dem Mobilfunknetz 11 übermittelt und von dem Mobilfunknetz 11 die entsprechend der Kennung/IMSI zugeordnete Rufnummer/MSISDN über die entsprechende Kommunikationsverbindung 12 an das Mobilfunktelefon 1 übertragen und vorliegend seitens einer Speichereinrichtung der SIM-Chipkarte 9 beziehungsweise des SIM-Chips 10 gespeichert.

Wenn seitens der SIM-Chipkarte 9 beziehungsweise des SIM-Chips 10 bereits die der Kennung/IMSI im Mobilfunknetz 11 zugeordnete Rufnummer/MSISDN erfasst und gespeichert ist, erfolgt vorliegend diese Abfrage nicht noch einmal. Ist die Rufnummer/MSISDN noch nicht seitens der der SIM-Chipkarte 9 beziehungsweise des SIM-Chips 10 gespeichert, wird der Nutzer des Mobilfunktelefons 1 über ein entsprechend seitens des Mobilfunktelefons 1 angezeigtes Menü gefragt, ob er die eigene Rufnummer/MSISDN über eine entsprechende weitergehende Nutzung zur Wiedergabe der eigenen Rufnummer seitens der Anzeigeeinrichtung nutzen will oder nicht. Verneint der Nutzer die entsprechende weitergehende Nutzung der eigenen Rufnummer zur Wiedergabe seitens der Anzeigeeinrichtung, wird die Wiedergabefunktionalität der eigenen Rufnummer seitens der Anzeigeeinrichtung 2 automatisch deaktiviert. Der Nutzer kann dann über ein entsprechendes Menü später bei Bedarf die Erfassung der Rufnummer/MSISDN durch Abfrage seitens des Mobilfunknetzes 11 vornehmen und entsprechend seitens der SIM-Chipkarte 9 beziehungsweise des SIM-Chips 10 speichern.

Die endgeräteseitig, also seitens des Mobilfunktelefons 1 beziehungsweise der in diesem eingesetzten SiM-Chipkarte 9 erfasste Rufnummer/MSISDN ist vorliegend durch entsprechende einmalige Betätigung der Taste 7 der Eingabeeinrichtung 7 des Mobilfunktelefons 1 seitens der optischen Anzeigeeinrichtung 2 des Mobilfunktelefons 1 wiedergebbar. Die Taste 7 ist dabei vorliegend vorteilhafterweise ausschließlich zur erfindungsgemäßen Wiedergabe der Rufnummer/MSISDN funktionalisiert.

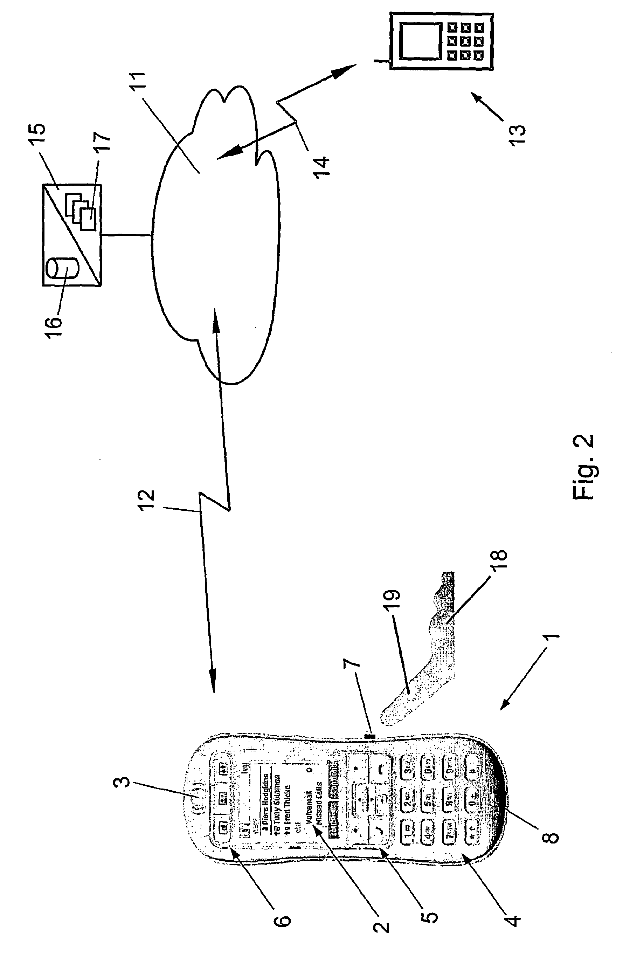

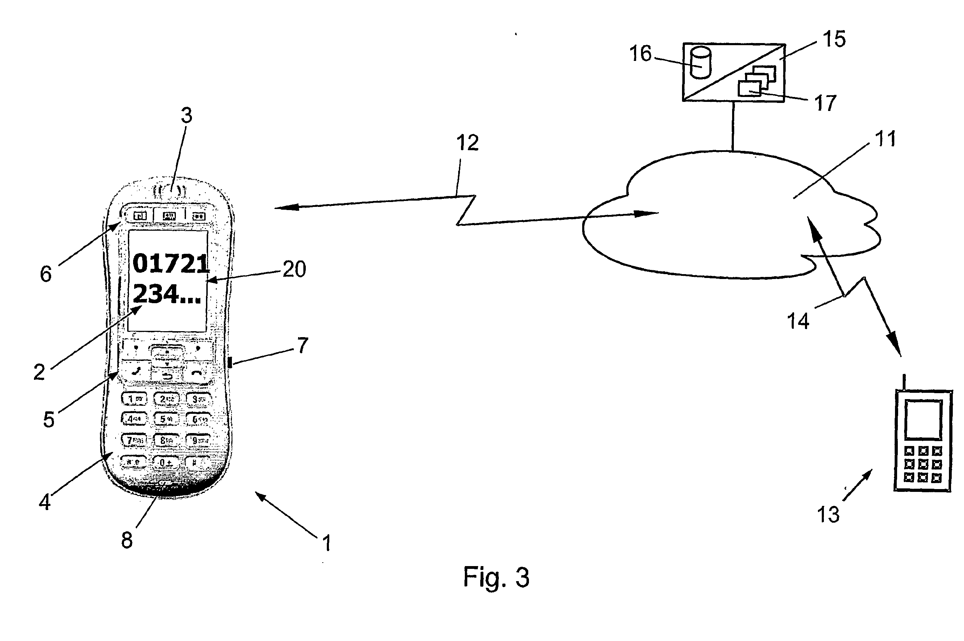

Fig. 2 zeigt symbolisch eine entsprechende Betätigung der Taste 7 der Eingabeeinrichtung 7 mittels des Fingers 19 der Hand 18 eines hier nicht weiter dargestellten Nutzers des Mobilfunktelefons 1. Fig. 3 zeigt die entsprechend durch Betätigung der Taste 7 der Eingabeeinrichtung 7 des Mobilfunktelefons 1 seitens der Anzeigeeinrichtung 2 des Mobilfunktelefons 1 bewirkte optische Wiedergabe der seitens der der SIM-Chipkarte 9 beziehungsweise des SIM-Chips 10 erfassten Rufnummer/MSISDN 20, vorliegend der Rufnummer "01721234...". Die Wiedergabe 20 der Rufnummer/MSISDN erfolgt dabei, wie anhand eines Vergleichs der seitens der Anzeigeneinrichtung 2 wiedergegebenen optischen Informationen in Fig. 2 und Fig. 3 ersichtlich in einer graphisch vergrößerten und hervorgehobenen Form, so dass die Rufnummer/MSISDN von dem Nutzer des Mobilfunktelefons 1 einfach abgelesen werden kann.

Die durch Betätigung der Taste 7 der Eingabeeinrichtung 7 des Mobilfunktelefons 1 bewirkte Wiedergabe 20 der Rufnummer/MSISDN ist vorliegend auch während einer erfolgenden Kommunikationsverbindung 12 über Mobilfunknetz 11 zu einem anderen Telekommunikationspartner 13 unter Nutzung der Kommunikationsverbindung 14 möglich.

Darüber hinaus kann vorliegend durch nochmalige Betätigung der Taste 7 der Eingabeeinrichtung 7 des Mobilfunktelefons 1 im Anschluss und/oder während einer entsprechenden Kommunikationsverbindung dem Telekommunikationsteilnehmer 13 beziehungsweise dessen Endgerät 13 die Rufnummer/MSISDN des Mobilfunktelefons 1 beziehungsweise der mit diesem genutzten SIM-Chipkarte 9 mittels einer SMS automatisiert übertragen werden.

Das in den Figuren der Zeichnung dargestellte Ausführungsbeispiel dient lediglich der Erläuterung der Erfindung und ist für diese nicht beschränkend.

### Bezugszeichenliste

- 1: Endgerät/Mobilfunktelefon
- 2: Anzeigeeinrichtung/Display
- 3: Anzeigeeinrichtung/Lautsprecher
- 4: Eingabeeinrichtung/Tastatur
- 5: Eingabeeinrichtung/Tasten
- 6: Eingabeeinrichtung/Tasten
- 7: Eingabeeinrichtung/Taste (Wiedergabe eigene Rufnummer (20))
- 8: Eingabeeinrichtung/Mikrofon
- 9: Einrichtung/SIM-Chipkarte
- 10: SIM-Chip
- 11: Telekommunikationsnetz/Mobilfunknetz
- 12: Kommunikationsverbindung
- 13: Endgerät/Mobilfunktelefon/Teilnehmer
- 14: Kommunikationsverbindung
- 15: Betreiber Telekommunikationsnetz/Mobilfunknetz (11)
- 16: Datenbank/HLR (Telekommunikationsnetz/Mobilfunknetz (11))
- 17: Zuordnung Kennung/Rufnummer
- 18: Hand (Nutzer Endgerät (1))
- 19: Finger
- 20: Wiedergabe eigene Rufnummer

## Patentansprüche

1. Verfahren zum Betreiben eines in einem Telekommunikationsnetz (11), vorzugsweise einem Mobilfunknetz (11), nutzbaren Endgerätes (1), welches eine Anzeigeeinrichtung (2, 3) zur optischen und/oder akustischen Wiedergabe von Informationen und wenigstens eine Eingabeeinrichtung (4, 5, 6, 7, 8) zur Erfassung von Informationen aufweist, wobei der Zugang des Endgerätes (1) zum Telekommunikationsnetz (11) unter Nutzung wenigstens einer einen Telekommunikationsteilnehmer im Telekommunikationsnetz (11) identifizierenden Kennung erfolgt, welcher seitens des Telekommunikationsnetzes (11) eine Rufnummer zugeordnet ist, die bei vorzugsweise einmaliger Betätigung der Eingabeeinrichtung (4, 5, 6, 7, 8) seitens der Anzeigeeinrichtung (2, 3) wiedergegeben wird,
**dadurch gekennzeichnet, dass**
die Rufnummer endgeräteseitig erfasst wird, wobei zumindest die erstmalige Erfassung der Rufnummer unter Nutzung der Kennung erfolgt, wozu seitens des Endgerätes (1) eine Einrichtung (9, 10) vorgesehen ist, die mit der Kennung die Rufnummer seitens des Telekommunikationsnetzes (11) abfragt.

2. Verfahren nach Anspruch 1, **dadurch gekennzeichnet, dass** die erfasste Rufnummer seltens des Endgerätes (1) und/oder seitens der Einrichtung (9, 10) gespeichert wird.

3. Verfahren nach Anspruch 2, **dadurch gekennzeichnet, dass** die gespeicherte Rufnummer wiedergegeben wird.

4. Verfahren nach einem der Ansprüche 1 bis 3, **dadurch gekennzeichnet, dass** die Kennung seitens der Einrichtung (9, 10) gespeichert ist.

5. Verfahren nach einem der Ansprüche 1 bis 4, **dadurch gekennzeichnet, dass** die Einrichtung (9, 10) ein in das Endgerät (1) einsetzbares kartenförmiges Trägerelement (9) elektronischer Baugruppen (10) ist, vorzugsweise ein dem Teilnehmer von dem Betreiber (15) des Telekommunikationsnetzes (11) zur Verfügung gestelltes kartenförmiges Teilnehmeridentifikationsmodul (9, 10).

6. Verfahren nach einem der Ansprüche 1 bis 5, **dadurch gekennzeichnet, dass** die Wiedergabe der Rufnummer (20) optisch und/oder akustisch erfolgt, wobei die optische Wiedergabe der Rufnummer (20) vorzugsweise graphisch in einer gegenüber sonstigen graphischen Wiedergaben vergrößerten Form erfolgt.

7. Verfahren nach einem der Ansprüche 1 bis 6, **dadurch gekennzeichnet, dass** die Betätigung der Eingabeeinrichtung (8) akustisch erfolgt, vorzugsweise durch Spracheingabe.

8. Verfahren nach einem der Ansprüche 1 bis 7, **dadurch gekennzeichnet, dass** die Betätigung der Eingabeeinrichtung (7) mechanisch erfolgt, wozu die Eingabeeinrichtung (7) vorzugsweise wenigstens eine Taste (7) aufweist, die bei Betätigung eine Wiedergabe der Rufnummer (20) auslöst und/oder bewirkt.

9. Verfahren nach einem der Ansprüche 1 bis 8, **dadurch gekennzeichnet, dass** die Betätigung der Eingabeeinrichtung durch räumliche Bewegung des Endgerätes (1) erfolgt, vorzugsweise durch ein wenigstens einmal erfolgendes Verschwenken des Endgerätes (1) um wenigstens eine Koordinatenachse des Endgerätes (1).

10. Verfahren nach einem der Ansprüche 1 bis 9, **dadurch gekennzeichnet, dass** eine Wiedergabe der Rufnummer (20) zumindest während einer Kommunikationsverbindung (12) ermöglicht wird.

11. Verfahren nach einem der Ansprüche 1 bis 10, **dadurch gekennzeichnet, dass** die Rufnummer durch wenigstens eine weitere Betätigung der Eingabeeinrichtung (4, 5, 6, 7, 6) unter Nutzung wenigstens eines Mitteilungsdienstes des Telekommunikationsnetzes (11) an einen anderen Teilnehmer (13) übertragbar ist, vorzugsweise während einer Kommunikationsverbindung (12, 14) mit dem Teilnehmer (13).

12. Verfahren nach einem der Ansprüche 1 bis 11, **dadurch gekennzeichnet, dass** die Rufnummer von der Einrichtung (9, 10) automatisch erfasst wird, wenn ein Endgerat (1) neu eingeschaltet wird, vorzugsweise wenn die Einrichtung (9, 10) erstmalig in einem Endgerät (1) eingesetzt Ist.

13. Verfahren nach einem der Ansprüche 1 bis 12, **dadurch gekennzeichnet, dass** dieses als Anwendungsprogramm auf die Einrichtung (9, 10) und/oder das Endgerät (1) übertragbar und seltens des Endgerätes (1) und/oder der Einrichtung (9, 10) ausführbar ist.

14. Endgerät (1) zur Nutzung in einem Telekommunikationsnetz (11), vorzugsweise einem Mobilfunknetz (11), mit einer Anzeigeeinrichtung (2, 3) zur optischen und/oder akustischen Wiedergabe von Informationen und wenigstens einer Eingabeeinrichtung (4, 5, 6, 7, 8) zur Erfassung von Informationen und mit wenigstens einer einen Telekommunikationsteilnehmer im Telekommunikationsnetz (11) identifizierenden Kennung, welche den Zugang des Endgerätes (1) zum Telekommunikationsnetz (11) ermöglicht und welcher seitens des Telekommunikationsnetzes (11) eine Rufnummer zugeordnet ist, die bei vorzugsweise einmaliger Betätigung der Eingabeeinrichtung (4, 5, 6, 7, 8) seitens der Anzeigeeinrichtung (2, 3) wiedergebbar ist,
**dadurch gekennzeichnet, dass**
die Rufnummer endgeräteseitig erfassbar ist, wobei zur Erfassung der Rufnummer seitens des Endgerätes eine Einrichtung (9, 10) vorgesehen ist, mit welcher die Rufnummer unter Nutzung der Kennung seitens des Telekommunikationsnetzes (11) abfragbar ist.

15. Endgerät (1) nach Anspruch 14, **dadurch gekennzeichnet, dass** die erfasste Rufnummer seitens einer Speichereinrichtung des Endgerätes (1) und/oder seitens einer Speichereinrichtung der Einrichtung (9, 10) speicherbar ist.

16. Endgerät (1) nach Anspruch 15, **gekennzeichnet durch** Mittel zur Wiedergabe der gespeicherten Rufnummer.

17. Endgerät (1) nach einem der Ansprüche 14 bis 16, **dadurch gekennzeichnet, dass** die Kennung seitens der Einrichtung (9, 10) gespeichert ist.

18. Endgerät (1) nach einem der Ansprüche 14 bis 17, **dadurch gekennzeichnet, dass** die Einrichtung (9, 10) ein in das Endgerät (1) einsetzbares kartenförmiges Trägerelement (9) elektronischer Baugruppen (10) ist, vorzugsweise ein dem Teilnehmer von dem Betreiber (15) des Telekommunlkatlonsnetzes (11) zur Verfügung gestelltes kartenförmiges Teilnehmeridentifikationsmodul (9, 10).

19. Endgerät (1) nach einem der Ansprüche 14 bis 18, **gekennzeichnet durch** Mittel zur optischen und/oder akustischen Wiedergabe der Rufnummer, wobei die optische Wiedergabe der Rufnummer (20) vorzugsweise graphisch in einer gegenüber sonstigen graphischen Wiedergaben vergrößerten Form erfolgt.

20. Endgerat (1) nach einem der Ansprüche 14 bis 19, **dadurch gekennzeichnet, dass** die Eingabeeinrichtung (8) zur akustischen Eingabe, vorzugsweise zur Spracheingabe, als Mikrofon ausgebildet ist.

21. Endgerät (1) nach einem der Ansprüche 14 bis 20, **dadurch gekennzeichnet, dass** die Eingabeeinrichtung (7) zur mechanischen Eingabe vorzugsweise wenigstens eine Taste (7) aufweist, die bei Betätigung eine Wiedergabe der Rufnummer (20) auslöst und/oder bewirkt.

22. Endgerät (1) nach einem der Ansprüche 14 bis 21, **dadurch gekennzeichnet, dass** die Eingabeeinrichtung Mittel zur Erkennung einer räumlichen Bewegung des Endgerätes (1) aufweist, vorzugsweise ein wenigstens einmal erfolgendes Verschwenken des Endgerätes (1) um wenigstens eine Koordinatenachse des Endgerätes (1).

23. Endgerät (1) nach einem der Ansprüche 14 bis 22, **gekennzeichnet durch** Mittel zur Wiedergabe der Rufnummer zumindest während einer Kommunikationsverbindung (12).

24. Endgerät (1) nach einem der Ansprüche 14 bis 23, **gekennzeichnet**-durch Mittel durch die durch wenigstens eine weitere Betätigung der Eingabeeinrichtung (4, 5, 6, 7, 8) die Rufnummer unter Nutzung wenigstens eines Mitteilungsdienstes des Telekommunikationsnetzes (11) an einen anderen Teilnehmer (13) übertragbar ist, vorzugsweise während einer Kommunikationsverbindung (12, 14) mit dem Teilnehmer (13).

25. Endgerät (1) nach einem der Ansprüche 14 bis 24, **dadurch gekennzeichnet, dass** dieses ein in Mobilfunknetzen (11) betreibbares mobiles Endgerät (1), vorzugsweise ein Mobilfunktelefon (1), ist.

26. Endgerät (1) nach einem der Ansprüche 14 bis 25, **dadurch gekennzeichnet, dass** dieses zur Ausführung eines Verfahrens nach einem der Ansprüche 1 bis 13 ausgebildet ist.

27. Kartenförmiges Trägerelement (9) elektronischer Baugruppen (10), welches in ein in einem Telekommunikationsnetz (11), vorzugsweise einem Mobilfunknetz (11), nutzbares Endgerät (1) einsetzbar ist und wenigstens eine einen Telekommunikationstellnehmer im Telekommunikationsnetz (11) identifizierende Kennung (IMSI) aufweist, die dem Endgerät (1) den Zugang zum Telekommunikationsnetz (11) ermöglicht und der seitens des Telekommunikationsnetzes (11) eine Rufnummer zuordbar ist,
wobei das Trägerelement (9) zur Ausführung eines Verfahrens nach einem der Ansprüche 1 bis 13 mit einem Endgerät nach einem der Ansprüche 14 bis 26 ausgebildet ist.

28. Kartenförmiges Trägerelement (9) elektronischer Baugruppen (10) nach Anspruch 27, **dadurch gekennzeichnet, dass** dieses ein dem Teilnehmer von dem Betreiber (15) des Telekommunikationsnetzes (11) zur Verfügung gestelltes kartenförmiges Teilnehmeridentifikationsmodul (9, 10) ist.

## Claims

1. A method for operating a terminal (1) that can be used in a telecommunication network (11), preferably a mobile network (11), which terminal comprises a display device (2, 3) for the optical and/or acoustic reproduction of information and at least one input device (4, 5, 6, 7, 8) for gathering information, wherein the access of the terminal (1) to the telecommunication network (11) is realized by using at least one identifier identifying a telecommunication subscriber in the telecommunication network (11), wherein a telephone number is allocated to the identifier by the telecommunication network (11), which telephone number will be reproduced by the display device (2, 3) upon preferably singular actuation of the input device (4, 5, 6, 7, 8),
**characterized in that**
the telephone number will be recorded by the terminal, wherein at least the first recording of the telephone number is realized by using the identifier, for which purpose a device (9, 10) is provided by the terminal (1), which device queries the telephone number using the identifier by means of the telecommunication network.

2. A method according to claim 1, **characterized in that** the recorded telephone number will be memorized by the terminal (1) and/or by the device (9, 10).

3. A method according to claim 2, **characterized in that** the memorized telephone number will be reproduced.

4. A method according to one of the claims 1 through 3, **characterized in that** the identifier is memorized by the device (9, 10).

5. A method according to one of the claims 1 through 4, **characterized in that** the device (9, 10) is a card-shaped carrier element (9) of electronic componentries (10) which can be inserted into the terminal (1), preferably a card-shaped subscriber identification module (9, 10) made available to the subscriber by the operator (15) of the telecommunication network (11).

6. A method according to one of the claims 1 through 5, **characterized in that** the telephone number (20) will be optically and/or acoustically reproduced, wherein the optical reproduction of the telephone number (20) will be preferably realized graphically in a magnified form in comparison to other graphic reproductions.

7. A method according to one of the claims 1 through 6, **characterized in that** the input device (8) is actuated acoustically, preferably by voice entry.

8. A method according to one of the claims 1 through 7, **characterized in that** the input device (7) is actuated mechanically, for which purpose the input device (7) preferably comprises at least one key (7) which triggers and/or causes the reproduction of the telephone number (20) when being actuated.

9. A method according to one of the claims 1 through 8, **characterized in that** the input device is actuated by spatial movement of the terminal (1), preferably by at least once horizontally swinging the terminal (1) around at least one coordinate axis of the terminal (1).

10. A method according to one of the claims 1 through 9, **characterized in that** a reproduction of the telephone number (20) is at least enabled during a communication connection (12).

11. A method according to one of the claims 1 through 10, **characterized in that** the telephone number can be transmitted to another subscriber (13) by at least one other actuation of the input device (4, 5, 6, 7, 8) using at least one message service of the telecommunication network (11), preferably during a communication connection (12, 14) to the subscriber (13).

12. A method according to one of the claims 1 through 11, **characterized in that** the telephone number will be automatically recorded by the device (9, 10), if a terminal (1) is newly started, preferably if the device (9, 10) is used in a terminal (1) for the first time.

13. A method according to one of the claims 1 through 12, **characterized in that** this one can be transmitted as application program to the device (9, 10) and/or the terminal (1) and be carried out by the terminal (1) and/or the device (9, 10).

14. A terminal (1) for the use in a telecommunication network (11), preferably a mobile network (11), comprising a display device (2, 3) for the optical and/or acoustic reproduction of information and at least one input device (4, 5, 6, 7, 8) for gathering information and at least one identifier identifying a telecommunication subscriber in a telecommunication network (11), which identifier enables the access of the terminal (1) to the telecommunication network (11) and to which identifier a telephone number is allocated by the telecommunication network (11), which telephone number can be reproduced by the display device (2, 3) upon preferably singular actuation of the input device (4, 5, 6, 7, 8),
**characterized in that**
the telephone number can be recorded by the terminal, wherein a device (9, 10) is provided by the terminal (1) for recording the telephone number, by means of which device the telephone number can be queried by the telecommunication network (11) using the identifier.

15. A terminal (1) according to claim 14, **characterized in that** the recorded telephone number can be memorized by means of a memory device of the terminal (1) and/or by means of a memory device of the device (9, 10).

16. A terminal (1) according to claim 15, **characterized by** means for the reproduction of the memorized telephone number.

17. A terminal (1) according to one of the claims 14 through 16, **characterized in that** the identifier is memorized by the device (9, 10).

18. A terminal (1) according to one of the claims 14 through 17, **characterized in that** the device (9, 10) is a card-shaped carrier element (9) of electronic componentries (10) which can be inserted into the terminal (1), preferably a card-shaped subscriber identification module (9, 10) made available to the subscriber by the operator (15) of the telecommunication network (11).

19. A terminal (1) according to one of the claims 14 through 18, **characterized by** means for the optical and/or acoustic reproduction of the telephone number, wherein the optical reproduction of the telephone number (20) will be preferably realized graphically in a magnified form in comparison to other graphic reproductions.

20. A terminal (1) according to one of the claims 14 through 19, **characterized in that** the input device (8) is a microphone for an acoustic input, preferably a voice entry.

21. A terminal (1) according to one of the claims 14 through 20, **characterized in that** the input device (7) for the mechanical input preferably comprises at least one key (7) which triggers and/or causes a reproduction of the telephone number (20) when being actuated.

22. A terminal (1) according to one of the claims 14 through 21, **characterized in that** the input device comprises means for recognizing a spatial movement of the terminal (1), preferably a horizontal swing of the terminal (1) around at least one coordinate axis of the terminal (1) which is realized at least once.

23. A terminal (1) according to one of the claims 14 through 22, **characterized by** means for the reproduction of the telephone number at least during a communication connection (12).

24. A terminal (1) according to one of the claims 14 through 23, **characterized by** means thanks to which the telephone number can be transmitted to another subscriber (13) by at least one other actuation of the input device (4, 5, 6, 7, 8) using at least one message service of the telecommunication network (11), preferably during a communication connection (12, 14) to the subscriber (13).

25. A terminal (1) according to one of the claims 14 through 24, **characterized in that** this one is a mobile terminal (1) that can be operated in mobile networks (11), preferably a mobile telephone (1).

26. A terminal (1) according to one of the claims 14 through 25, **characterized in that** this one Is adapted to carry out a method according to one of the claims 1 through 13.

27. A card-shaped carrier element (9) of electronic componentries (10) which can be inserted into a terminal (1) that can be used in a telecommunication network (11), preferably a mobile network (11) and which comprises at least one identifier (IMSI) identifying a telecommunication subscriber in the telecommunication network (11), which identifier allows the terminal (1) to get access to the telecommunication network (11) and can be allocated to a telephone number by means of the telecommunication network (11),
wherein the carrier element (9) is adapted to carry out a method according to one of the claims 1 through 13 with a terminal according to one of the claims 14 through 26.

28. A card-shaped carrier element (9) of electronic componentries (10) according to claim 27, **characterized in that** this one is a card-shaped subscriber identification module (9, 10) made available to the subscriber by the operator (15) of the telecommunication network (11).

## Revendications

1. Procédé d'actionnement d'un terminal (1) utilisable dans un réseau de télécommunication (11), de préférence un réseau mobile (11), et comprenant un dispositif d'affichage (2, 3) pour la reproduction optique et/ou acoustique des informations et au moins un dispositif d'entrés (4, 5, 6, 7, 8) pour enregistrer des informations, l'accès du terminal (1) au réseau de télécommunication (11) étant réalisé en utilisant au moins un identificateur identifiant un abonné de télécommunication dans le réseau de télécommunication (11), un numéro d'appel étant attribué à l'identificateur par le réseau de télécommunication, le numéro d'appel étant reproduit par la dispositif d'affichage (2, 3) en actionnant le dispositif d'entrée (4, 5, 6, 7, 8) de préférence une seule fois,
**caractérisé en ce que**
le numéro d'appel est enregistré par le terminal, au moins le premier enregistrement du numéro d'appel étant réalisé en utilisant l'identificateur, pour lequel le terminal prévoit un dispositif (9, 10) qui utilise l'identificateur pour lire le numéro d'appel par moyen du réseau de télécommunication (11).

2. Procédé selon la revendication 1, **caractérisé en ce que** le numéro d'appel enregistré est mémorisé par le terminal (1) et/ou par le dispositif (9, 10).

3. Procédé selon la revendication 2, **caractérisé en ce que** le numéro d'appel mémorisé est reproduit.

4. Procédé selon l'une des revendications 1 à 3, **caractérisé en ce que** l'identificateur est mémorisé par le dispositif (9, 10).

5. Procédé selon l'une des revendications 1 à 4, **caractérisé en ce que** le dispositif (9, 10) est un élément porteur (9) des ensembles an pièces détachées (10) sous forme de carte qu'on peut insérer dans le terminal (1), de préférence un module d'identification d'abonné (9, 10) sous forme de carte et mis à la disposition de l'abonné par l'opérateur (15) du réseau de télécommunication (11).

6. Procédé selon l'une des revendications 1 à 5, **caractérisé en ce que** le numéro d'appel (20) est reproduit de manière optique et/ou acoustique, la reproduction optique se faisant graphiquement sous une forme agrandie par rapport à d'autres reproductions graphiques

7. Procédé selon l'une des revendications 1 à 6, **caractérisé en ce que** l'actionnement du dispositif d'entrée (8) se fait de manière acoustique, de préférence par entrée par voix.

8. Procédé selon l'une des revendications 1 à 7, **caractérisé en ce que** l'actionnement du dispositif d'entrée (7) se fait de manière mécanique, pour lequel le dispositif d'entrée comprend de préférence une touche (7) qui déclenche et/ou cause la reproduction du numéro d'appel si on l'actionne.

9. Procédé selon l'une des revendications 1 à 8, **caractérisé en ce que** l'actionnement du dispositif d'entrée se fait par déplacement spatial du terminal (1), de préférence en balayant horizontalement le terminal (1) au moins une fois autour d'un axe des coordonnées du terminal (1).

10. Procédé selon l'une des revendications 1 à 9, **caractérisé en ce qu'**une reproduction du numéro d'appel (20) est rendu possible au moins pendant une connexion de communication (12).

11. Procédé selon l'une des revendications 1 à 10, **caractérisé en ce que** le numéro d'appel peut être transmis à un autre abonné (13) par au moins un autre actionnement du dispositif d'entrée (4, 5, 6, 7, 8) en utilisant au moins un service de messages du réseau de télécommunication (11), de préférence pendant une connexion de communication (12, 14) à l'abonné (13).

12. Procédé selon l'une des revendications 1 à 11, **caractérisé en ce que** le numéro d'appel est enregistré automatiquement par le dispositif (9, 10) si on met un terminal (1) nouvellement en marche, de préférence si on utilise le dispositif (9, 10) dans un terminal (1) pour la première fois.

13. Procédé selon l'une des revendications 1 à 12, **caractérisé en ce que** celui-ci peut être transmis en tant que programme d'application au dispositif (9, 10) et/ou au terminal (1) et être réalisé par moyen du terminal (1) et/ou du dispositif (9, 10).

14. Terminal (1) pour l'utilisation dans un réseau de télécommunication (11), de préférence un réseau mobile (11), comprenant un dispositif d'affichage (2, 3) pour la reproduction optique et/ou acoustique des informations et au moins un dispositif d'entrée (4, 5, 6, 7, 8) pour enregistrer des informations et comprenant au moins un identificateur identifiant un abonné de télécommunication dans le réseau de télécommunication (11), l'identificateur permettant l'accès du terminal (1) au réseau de télécommunication (11) et étant attribué à un numéro d'appel par le réseau de télécommunication (11), le numéro d'appel pouvant être reproduit par moyen du dispositif d'affichage (2, 3), de préférence en actionnant le dispositif d'entrée (4, 5, 8, 7, 8) une seule fois,
**caractérisé en ce que**
le terminal peut enregistrer le numéro d'appel, le terminal prévoyant un dispositif (9, 10) pour l'enregistrement du numéro d'appel, à l'aide duquel on peut lire le numéro d'appel par moyen du réseau de télécommunication en utilisant l'identificateur.

15. Terminal (1) selon la revendication 14, **caractérisé en ce que** le numéro d'appel enregistré peut être mémorisé par moyen d'un dispositif de mémorisation du terminal (1) et/ou par moyen d'un dispositif de mémorisation du dispositif (9, 10).

16. Terminal (1) selon la revendication 15, **caractérisé par** des moyens de reproduction du numéro d'appel mémorisé.

17. Terminal (1) selon l'une des revendications 14 à 16, **caractérisé en ce que** l'identificateur est mémorisé par le dispositif (9, 10).

18. Terminal (1) selon l'une des revendications 14 à 17, **caractérisé en ce que** le dispositif (9, 10) est un élément porteur (9) des ensembles en pièces détachées (10) sous forme de carte qu'on peut insérer dans le terminal (1), de préférence un module d'identification d'abonné (9, 10) sous forme de carte et mis à la disposition de l'abonné par l'opérateur (15) du réseau de télécommunication (11).

19. Terminal (1) selon l'une des revendications 14 à 18, **caractérisé par** des moyens de reproduction optique et/ou acoustique du numéro d'appel, la reproduction optique du numéro d'appel (20) se faisant de préférence graphiquement sous une forme agrandie par rapport à d'autres reproductions graphiques.

20. Terminal (1) selon l'une des revendications 14 à 19, **caractérisé en ce que** le dispositif d'entrée (8) destiné à l'entrée acoustique, de préférence à l'entrée par voix, est un microphone.

21. Terminal (1) selon l'une des revendications 14 à 20, **caractérisé en ce que** le dispositif d'entrée (7) destiné à l'entrée mécanique comprend de préférence au moins une touche (7) qui déclenche et/ou cause une reproduction du numéro d'appel (20) si on l'actionne,

22. Terminal (1) selon l'une des revendications 14 à 21, **caractérisé en ce que** le dispositif d'entrée comprend des moyens de reconnaissance d'un déplacement spatial du terminal (1), de préférence d'un balayage horizontal du terminal (1) fait au moins une fois autour d'au moins un axe des coordonnées du terminal (1).

23. Terminal (1) selon l'une des revendications 14 à 22, **caractérisé par** des moyens de reproduction du numéro d'appel au moins pendant une connexion de communication (12).

24. Terminal (1) selon l'une des revendications 14 à 23, **caractérisé par** des moyens à l'aide desquels le numéro d'appel peut être transmis à un autre abonné (13) par au moins un autre actionnement du dispositif d'entrée (4, 5, 6, 7, 8) en utilisant au moins un service de messages du réseau de télécommunication (11), de préférence pendant une connexion de communication (12, 14) à l'abonné (13).

25. Terminal (1) selon l'une des revendications 14 à 24, **caractérisé en ce que** celui-ci est un terminal mobile (1) pouvant être actionné dans des réseaux mobiles (11), de préférence un téléphone mobile (1).

26. Terminal (1) selon l'une des revendications 14 à 25, **caractérisé en ce que** celui-ci est configuré pour l'exécution d'un procédé selon l'une des revendications 1 à 13.

27. Elément porteur (9) des ensembles en pièces détachées (10) sous forme de carte qu'on peut insérer dans un terminal (1) pouvant être utilisé dans un réseau de télécommunication (11), de préférence un réseau mobile (11), et qui comprend au moins un identificateur (IMSI) identifiant un abonné de télécommunication dans le réseau de télécommunication (11), l'identificateur permettant au terminal (1) d'accéder au réseau de télécommunication (11) et le réseau de télécommunication (11) pouvant attribuer un numéro d'appel à l'identificateur,
dans lequel l'élément porteur (9) est configuré pour l'exécution du procédé selon l'une des revendications 1 à 13 avec un terminal selon l'une des revendications 14 à 26.

28. Elément porteur (9) des ensembles en pièces détachées (10) sous forme de carte selon la revendication 27, **caractérisé en ce que** celui-ci est un module d'identification d'abonné (9, 10) sous forme de carte et mis à la disposition de l'abonné par l'opérateur (15) du réseau de télécommunication (11)
